# EUROPEAN PATENT SPECIFICATION

(11) **EP 2 343 182 B1**
(45) Date of publication and mention of the grant of the patent: **28.01.2015**
(21) Application number: 09819116.6
(22) Date of filing: 30.09.2009
(51) Int. Cl.: B29D 30/26, B29D 30/32

(54) **TIRE MOLDING DRUM**
REIFENFORMTROMMEL
TAMBOUR DE MOULAGE DE PNEUMATIQUE

(30) Priority: 08.10.2008 JP 2008262170
(43) Date of publication of application: 13.07.2011
(73) Proprietor: Bridgestone Corporation, Tokyo 104-8340 (JP)
(72) Inventor: TOYOFUKU, Masanobu, Kodaira-shi Tokyo 187-8531 (JP)
(74) Representative: Oxley, Robin John George
(86) International application number: PCT/JP2009/067087
(87) International publication number: WO 2010/041581

(56) References cited:
- EP-A2- 1 182 028
- WO-A1-2006/033119
- JP-A- 2000 079 616
- JP-A- 2000 135 745
- JP-A- 2006 007 654

## Description

### TECHNICAL FIELD

The present invention relates to a tire building drum having a drum body, and a bladder attached on the outer side of the drum body in the radial direction and inflating with supply of air, for folding side ends of a carcass band about bead cores on the respective sides, and/or, toroidally inflating a center portion of the carcass band extending between the bead cores on the respective sides.

### RELATED ART

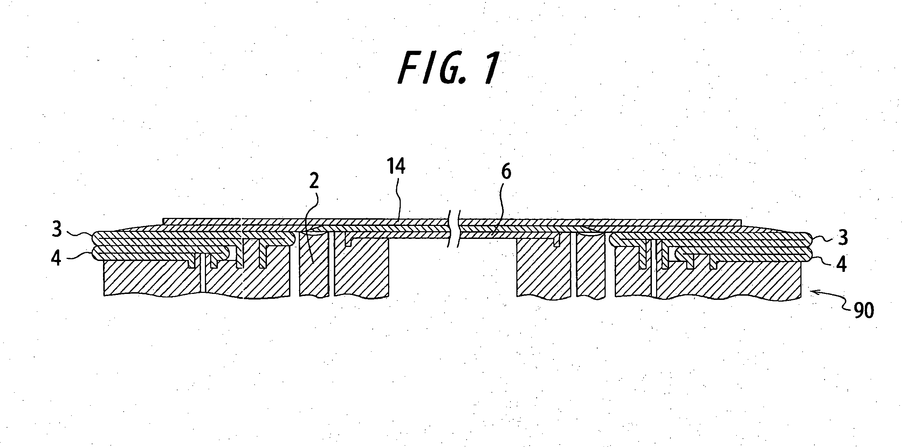

Conventionally, tires have been built by processes in which: a carcass band 14 is placed on a building drum 90 as illustrated in a sectional view of FIG. 1; preset beads 17 formed by bead cores 15 and bead fillers 16 are placed on the outer side of both ends of the carcass band in the radial direction; then, by extending, in the radial direction, both bead lock mechanisms 2 provided to the building drum 90, the bead cores 12 are locked to the building drum 90 while sandwiching the carcass band 14 with the bead lock mechanisms 2; a center bladder 6 is inflated with supply of inner pressure while the bead lock mechanisms 2 are being moved toward the center in the axial direction; a center portion 14a of the carcass band extending between the bead cores 12 are toroidally inflated; and then, inner pressure is supplied to folding bladders 3, 4 disposed on both sides of the building drum 90 in the axial direction to make the folding bladders 3, 4 inflated, whereby both end portions 14b of the carcass band are folded.

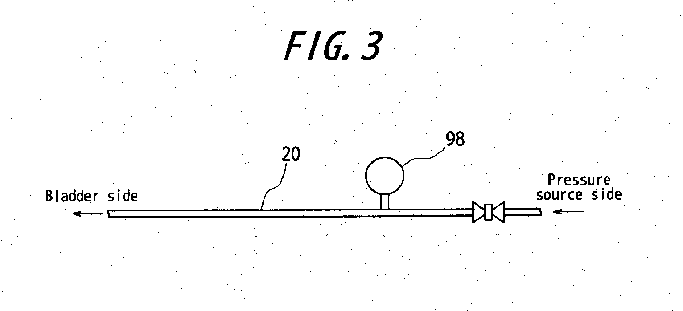

At the time of inflating these bladders 6, 3, 4 with supply of inner pressure, it is necessary to suppress the difference between a predicted value and an actual value of change over time concerning the inner pressure in the bladders during the inflation of these bladders 6, 3, 4, in order to stably obtain a green tire. Therefore, it is important to monitor the inner pressure in order to immediately find troubles if the bladder is punctured or there occurs leakage or clogging in a pipe line for supplying the air to the bladders. In view of the facts described above, it is proposed that: a pressure sensor 98 is provided to a pipe line 20 extending from a pressure source to the bladders 6, 3, 4 as illustrated in the schematic view of FIG. 3; if the measured pressure indicates an abnormal value, an alarm is raised; and, signals from the pressure sensor 98 provided to the pipe line 20 is fed back to control the inner pressure, in order to control the change over time of the inner pressure in the bladders so as to accurately follow a predetermined pattern. Reference is made to WO2006/033119 which discloses a tire building drum according to the preamble of claim 1.

Reference is also made to JP2006-007654 and JP2000-135745.

### DISCLOSURE OF THE INVENTION

### PROBLEMS TO BE SOLVED BY THE INVENTION

However, as described above, in a case where the pressure sensor is provided to the pipe line 20, an alarm may be raised or control may be performed based on information different from the actual pressure in the bladders due to pipe resistance and the like. Therefore, there is a demand for improving the accuracy of the alarm and control.

The present invention has been made in view of the problems described above, and an object of the present invention is to provide a building drum capable of accurately controlling inner pressure of a folding bladder and a center bladder, and/or accurately raising an alarm on abnormal inner pressure.

### MEANS FOR SOLVING THE PROBLEM

According to the invention, there is provided a tire building drum having a drum body, and a bladder attached on the outer side of the drum body in the radial direction and inflating with supply of air, for folding side ends of a carcass band about bead cores on the respective sides, and/or, toroidally inflating a center portion of the carcass band extending between the bead cores on the respective sides, in which a sensor module is provided in a cavity of at least one of the bladders, the sensor module including an inner pressure sensor for measuring pressure in the cavity of the center bladder and being disposed inward from the outer surface of the drum body in the radial direction.

The sensor module includes a transmitting unit for transmitting pressure measured by the inner pressure sensor to an inner-pressure information receiver provided outside the building drum through radio wave.

The transmitting unit is provided with a loop antenna that makes a circle on a predetermined plane. In this specification, the predetermined plane indicates a plane on which the loop antenna extends.

Preferably, a line perpendicular to the predetermined plane is configured so as to be in parallel to a plane tangent to the outer surface of the drum at a position corresponding to the sensor module in the circumferential direction.

### EFFECT OF THE INVENTION

According to the invention, the sensor module having the inner pressure sensor for measuring pressure in the cavity of the folding bladder or the center bladder is provided in the cavity of the folding bladder or the center bladder. Therefore, the inner pressure in the bladder can be directly measured, and, it is possible to accurately control the inner pressure in the bladders, and/or transmit the abnormality of the inner pressure. Further, the sensor module is disposed inward from the outer surface of the drum body in the radial direction, whereby it is possible to prevent the problems that, in a case where the sensor module is attached on the outer side of the building drum in the radial direction, such as on the inner surface of the bladder, the sensor module protrudes by this amount from the outer surface of the building drum, so that a built green tire is more likely to be shaped unevenly, or the bladder or sensor module is more likely to be damaged during the building operation.

The sensor module includes a transmitter for transmitting the pressure measured by the inner pressure sensor to an inner-pressure information receiver provided outside the building drum through radio wave. Therefore, by operating the sensor module with a battery, a wire for electric power is not necessary, whereby the wire for connecting with the sensor module can be eliminated completely. This realizes the simple wiring of the building drum that may rotate, and makes the configuration thereof simpler as compared with the case where the sensor module is connected with the outside through wiring, whereby it is possible to significantly reduce the cost.

The transmitting unit is provided with a loop antenna that makes a circle on a predetermined plane. Therefore, it is possible to strengthen the intensity of the radio wave, which is emitted only toward the outer side in the radial direction from the sensor module provided in the recessed portion formed by boring a part of the building drum made of metal, so that it is possible to enhance the reliability of communication between the sensor module and the external inner-pressure information receiver.

Preferably, the predetermined plane is disposed such that a line perpendicular to the predetermined plane is in parallel to a plane tangent to the outer surface of the drum at a position corresponding to the sensor module in the circumferential direction. Therefore, the signals from the loop antenna can be transmitted toward the outer side of the building drum in the radial direction, whereby it is possible to further strengthen the intensity of the radio-wave signal.

### BRIEF DESCRIPTION OF THE DRAWINGS

FIG. 1 is a sectional view illustrating one example of a conventional anti-vibration device.

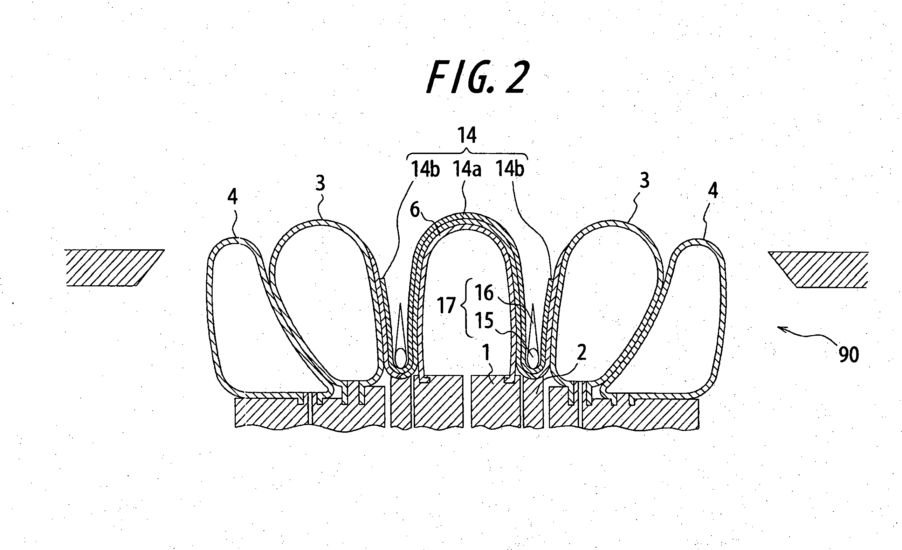

FIG. 2 is a sectional view illustrating the other example of a conventional anti-vibration device.
FIG. 3 is a schematic view illustrating a pipe line extending from a pressure source to a bladder.
FIG. 4 is a schematic sectional view illustrating a building drum according to the present invention in a state where bladders are deflated and a carcass band is disposed on the outer surface of the bladder.
FIG. 5 is a schematic sectional view illustrating the building drum according to the present invention in a state where a center bladder is inflated to toroidally inflate a central portion of the carcass band while folding bladders are inflated to fold side ends of the carcass band.
FIG. 6 is a sectional view illustrating the building drum in a case where a sensor module is attached on the inner surface of the bladder.
FIG. 7 is a perspective view illustrating a recessed portion corresponding to the folding bladder.
FIG. 8 are schematic layouts of the sensor modules when viewed from a direction parallel to an axis of the building drum and when viewed from a direction perpendicular to the axis of the building drum.
FIG. 9 is a block diagram illustrating a configuration of the sensor module.

### BEST MODE FOR CARRYING OUT THE INVENTION

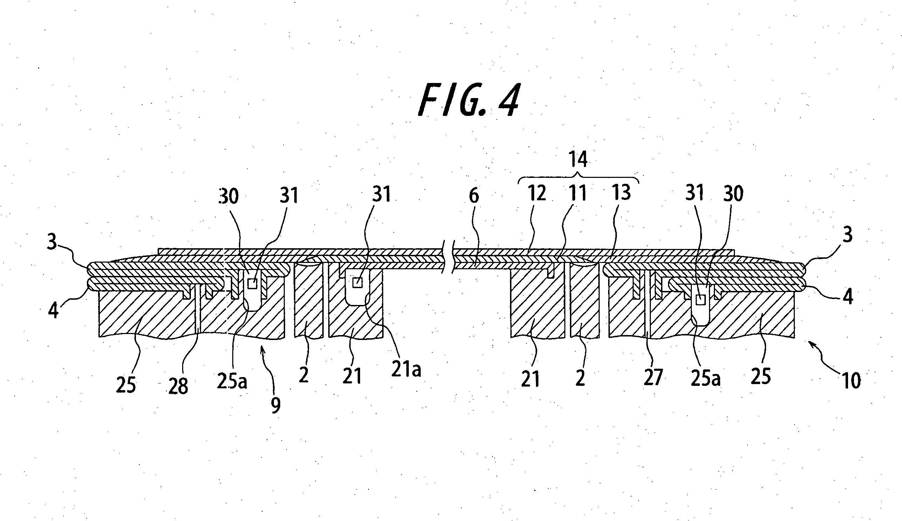

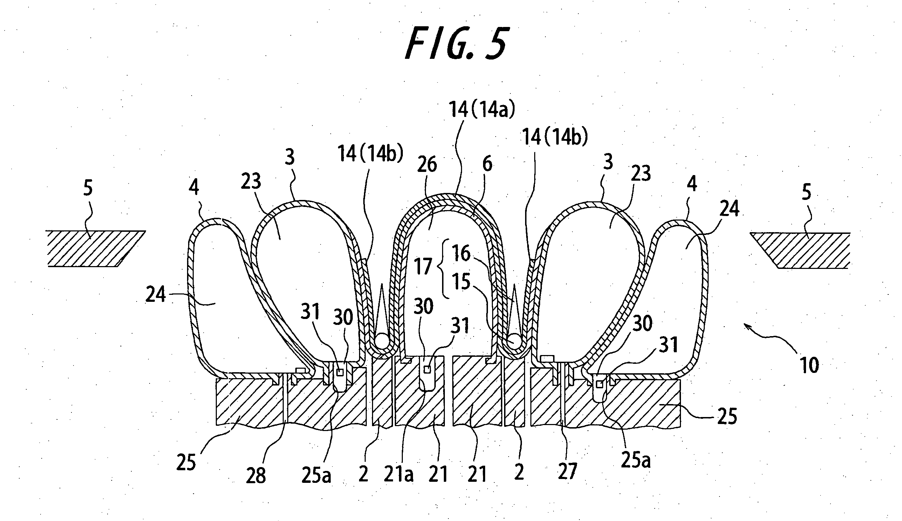

An embodiment of the present invention will be described with reference to the drawings. FIG. 4 and FIG. 5 are sectional views schematically illustrating building drums in different states. A building drum 10 includes a drum body 9, folding bladders 3, 4 attached on the outer side of the drum body 9 in the radial direction and inflating with supply of air, for folding ends portions 14b of a carcass band 14 about bead cores 15 on the respective sides, and, a center bladder 6 attached on the outer side of the drum body 9 in the radial direction and inflating with supply of air, for toroidally inflating a center portion 14a of the carcass band 14 extending between the bead cores 15 on the respective sides.

It should be noted that, as illustrated in the drawings, the carcass band 14 may be formed by an inner liner 11, a side wall rubber 13 disposed on the outer side of the inner liner 11 in the axial direction, and a carcass ply 12 disposed on the outer side in the radial direction than the inner liner 11, but the side wall rubber 13 may not be included in the carcass band 14.

Further, the building drum 10 preferably includes bead lock mechanisms 2 that sandwich the bead cores 15 on the respective sides with the carcass band 14, and support and lock the bead cores 15 from the inside in the radial direction.

The drum body 19 is configured to include center rings 21 that fix the respective ends of the center bladder 6 in the axial direction and are tangent to a cavity 26 of the center bladder 6, and end rings 25 that fix base ends of the folding bladders, 3, 4 and each have cavities 23, 24 of the folding bladders 3, 4. The end rings 25 have air-flow holes 27, 28 for supplying or discharging the air to or from the cavities 23, 24.

Building the tire using the building drum 10 as described above includes: placing the carcass band 14 on the building drum 10 as illustrated in FIG. 4; placing the preset bead 17 formed by the bead cores 15 on the respective sides and the bead filler 16, on the outer side of the carcass band 14 in the radial direction; extending, in the radial direction, both bead lock mechanisms 2 provided to the building drum 10 to lock the bead cores 12 to the building drum 10 while sandwiching the carcass band 14 with the bead lock mechanisms 2; inflating the center bladder 6 with supply of the inner pressure while the bead lock mechanisms 2 are being moved toward the center in the axial direction to toroidally inflate the center portion 14a of the carcass band 14 extending between the bead cores 15 on the respective sides, as illustrated in the sectional view of FIG. 5; inflating the folding bladders 3, 4 disposed on the respective sides of the building drum 10 in the axial direction with supply of the inner pressure to fold both end portions 14b of the carcass band; pressing the folding bladders 4 by a pressing drum toward the center in the axial direction to compressingly bond the end portions 14b of the carcass band with the center portion 14a of the carcass band; and, placing a belt and a tread on the outer side of the toroidally inflated center portion 14a of the carcass band in the radial direction. Through the steps described above, a green tire is formed.

In the building drum 10 according to the present invention, at least one of the center bladder 6 and the folding bladders 3, 4 may have, in a cavity thereof, a sensor module 30 including an inner pressure sensor 31 for measuring pressure in the cavity 26, 23, 24 of the center bladder 6 and/or the folding bladders 3, 4. The sensor module 30 is disposed more inward than the outer surface of the drum body 9 in the radial direction. The inner pressure sensor 31 may be accommodated in the sensor module 30, and may be attached separately to the sensor module.

It should be noted that, although it is only necessary to include at least one of the bladders 6, 3, 4 in the present invention, description has been made of a case where the building drum 10 has five bladders in total: one center bladder 6, two pairs of folding bladders 3 and folding bladders 4. In the following description, the building drum 10 has the five bladders in total: one center bladder 6, two pairs of folding bladders 3 and folding bladders 4, and five sensor modules 31 correspondingly to the bladders 6, 3, 4.

In the building drum 10 according to the present invention, each of the bladders 6, 3, 4 has, in the cavity or the cavities 26, 23, 24 thereof, the inner pressure sensor 31 for measuring the inner pressure of the cavity or the cavities 26, 23, 24, and hence, the inner pressure of the bladders 6, 3, 4 can be directly measured, whereby it is possible to control the inner pressure, and/or transmit the abnormality of the inner pressure in an accurate manner.

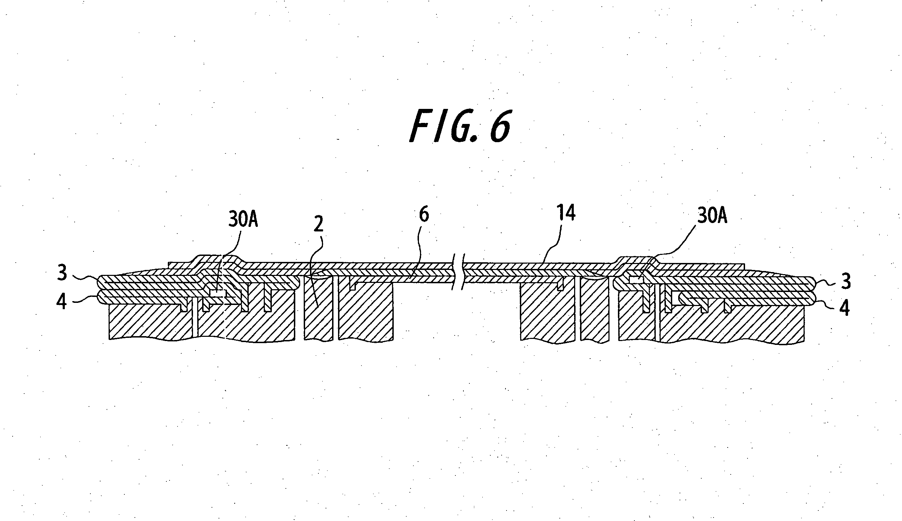

Further, each of the sensor modules 30 is disposed more inward than the outer surface of the drum body 9 in the radial direction. As illustrated in the sectional view of the building drum of FIG. 6, if sensor modules 30A are attached on the outer side of the building drum 10 in the radial direction, such as on the inner surface of the bladder 6, 3, 4, the sensor modules 30A protrude from the outer surface of the building drum by this amount. As a result, the carcass band becomes uneven, so that the built green tire has an uneven shape, or the bladder or sensor module is more likely to be damaged due to the building operation. The sensor module 30 according to the present invention has the configuration described above, and hence, such problems can be solved.

More specifically, the sensor module 30 for measuring the inner pressure of the center bladder 6 is fixed so as to be embedded in a recessed portion 21a formed at a portion that is tangent to the cavity 26 of the center ring 21 for supporting the respective ends of the center bladder 6. Similarly, the sensor modules 30 for measuring the inner pressure of the folding bladders 3, 4 are fixed so as to be embedded in recessed portions 25a of the end rings 25 for supporting the respective ends of the respective folding bladders 3, 4, the recessed portions 25a being formed at portions that are tangent to the respective cavities 23, 24.

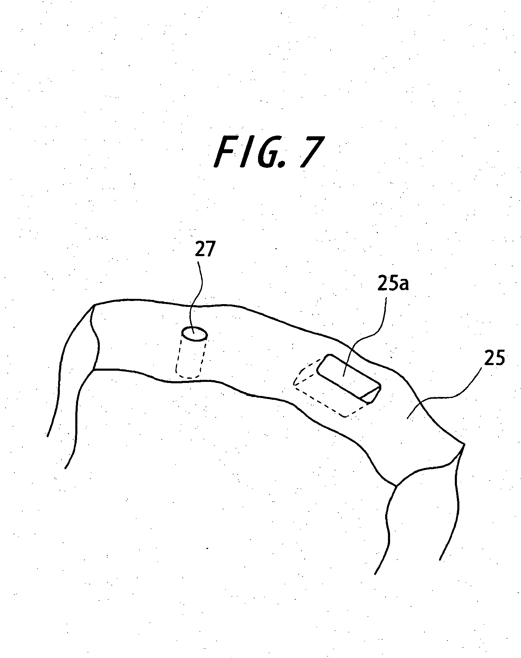

As an example of the recessed portion 21 a, 25a, the recessed portion 25a corresponding to the folding bladder 3 is illustrated in the perspective view of FIG. 7. The recessed portion 25a is preferably disposed beside the air-flow hole 27 in the circumferential direction.

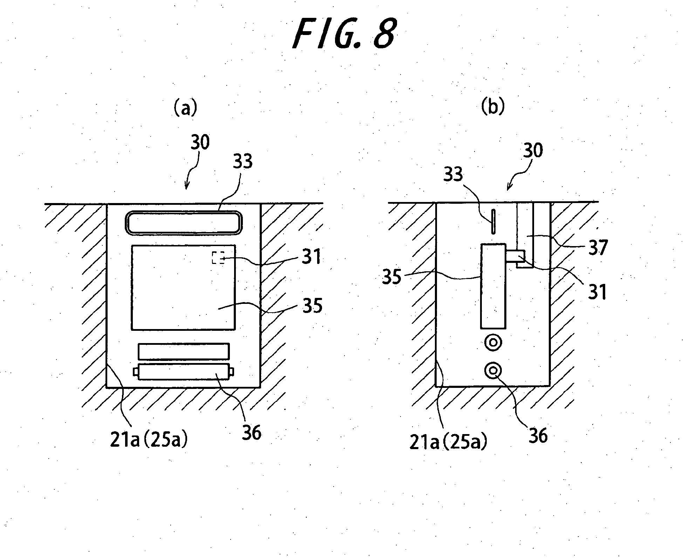

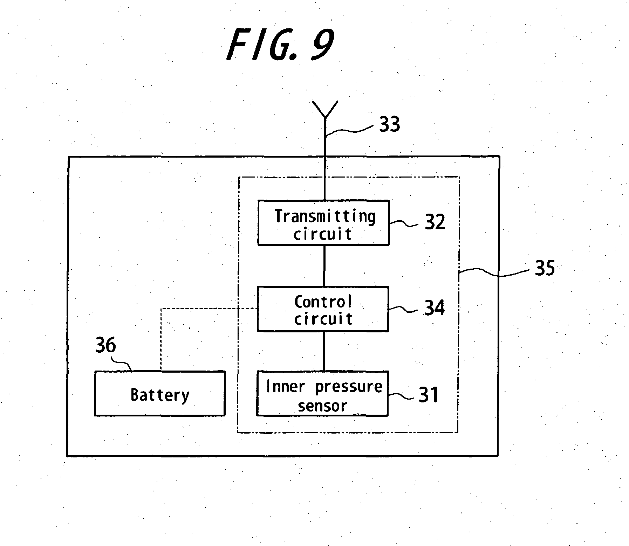

FIG. 8(a) is a schematic layout illustrating the sensor module 30 disposed in the recessed portion 26a, 25a when viewed from a direction parallel to the axis of the building drum 10; FIG. 8(b) is a schematic layout illustrating this sensor module 30 when viewed from a direction perpendicular to the axis of the building drum 10; and, FIG. 9 is a block diagram illustrating a configuration of the sensor module 30. The sensor module 30 includes: the inner pressure sensor 31; a transmitting unit formed by a transmitting circuit 32 and an antenna 33, for sending signals measured by the inner pressure sensor 31 as data to the outside through radio wave; and a control circuit 34 for converting the signals obtained from the inner pressure sensor 32 into the data and controlling each of the units in the sensor module. The sensor 31, the transmitting circuit 32 and the control circuit 34 are arranged on a substrate to constitute a substrate portion 35 as a whole.

Although the pressure sensor 31 is disposed on the substrate, a pressure-sensing element thereof communicates with the cavities 26, 23, 24 through an air hole 37. This configuration enables the pressure sensor 31 to accurately measure the inner pressure of the cavities 26, 23, 24. Further, the sensor module 30 includes a battery 36 for supplying electric power to the units.

It should be noted that there is provided externally a bladder control system (not shown) having an inner-pressure information receiver for receiving data from the antenna 33. With this bladder control system, various controls including monitoring at the time of inflating the bladder 6, 3, 4 are performed.

The antenna 32 is configured by a loop antenna that makes a circuit on a predetermined plane. Preferably, this predetermined plane is disposed such that a line perpendicular to the predetermined plane is in parallel to a plane that is tangent to the outer surface of the drum at a position corresponding to the sensor module 30 in the circumferential direction. This makes it possible to strengthen the intensity of the radio wave, which is emitted from the recessed portions 21a, 25a only toward the outer side in the radial direction, so that the data on the inner pressure can be reliably sent.

### EXPLANATION OF REFERENCE NUMERALS

- 2: Bead lock mechanism
- 3, 4: Folding bladder
- 5: Pressing drum
- 9: Drum body
- 10: Building drum
- 14: Carcass band
- 14a: Center portion of carcass band
- 14b: End portions of carcass band
- 15: Bead core
- 20: Pipe line
- 21: Center ring
- 21a: Recessed portion of center ring
- 23, 24: Cavity of folding bladder
- 25: End ring
- 25a: Recessed portion of end ring
- 26: Cavity of center bladder
- 27, 28: Air-flow hole
- 30: Sensor module
- 31: Inner pressure sensor
- 32: Transmitting circuit
- 33: Antenna
- 34: Control circuit
- 35: Substrate portion
- 36: Battery
- 37: Air hole

## Claims

1. A tire building drum having a drum body (9), and a bladder (3,4,6) attached on the outer side of the drum body (9) in the radial direction and inflating with supply of air, for folding side ends (14b) of a carcass band (14) about bead cores (15) on the respective sides, and/or, toroidally inflating a center portion (14a) of the carcass band (14) extending between the bead cores (15) on the respective sides, wherein
a sensor module (30) is provided in a cavity (23, 24) of at least one of the bladders (3,4,6), the sensor module (30) including an inner pressure sensor (31) for measuring pressure in the cavity (23, 24) of the bladder (3,4,6) and being disposed inward from the outer surface of the drum body (9) in the radial direction, wherein
the sensor module (30) includes a transmitting unit (32) for transmitting pressure measured by the inner pressure sensor (31) to an inner-pressure information receiver provided outside the building drum through radio wave, **characterized in that**
the transmitting unit (32) is provided with a loop antenna that makes a circle on a predetermined plane.

2. The tire building drum according to claim 1, wherein
a line perpendicular to the predetermined plane is configured so as to be in parallel to a plane tangent to the outer surface of the drum (9) at a position corresponding to the sensor module (30) in the circumferential direction.

## Patentansprüche

1. Reifen-Aufbautrommel, die einen Trommelkörper (9) und ein Balg (3, 4, 6), der an der in der Radialrichtung äußeren Seite des Trommelkörpers (9) befestigt ist und mit Luftzufuhr aufgeblasen wird, um seitliche Enden (14b) eines Karkassenbandes (14) um Wulstkerne (15) auf den jeweiligen Seiten umzuschlagen und/oder kreisringförmig einen mittleren Abschnitt (14a) des Karkassenbandes (14), der sich zwischen den Wulstkernen (15) auf den jeweiligen Seiten erstreckt, aufzublasen, wobei
ein Sensormodul (30) in einem Hohlraum (23, 24) wenigstens eines der Bälge (3, 4, 6) bereitgestellt wird, wobei das Sensormodul (30) einen Innendrucksensor (31) zum Messen des Innendrucks in dem Hohlraum (23, 24) des Balgs (3, 4, 6) einschließt und von der Außenfläche des Trommelkörpers (9) in der Radialrichtung nach innen angeordnet ist, wobei
das Sensormodul (30) eine Übertragungseinheit (32) zum durch Funkwellen erfolgenden Übertragen des durch den Innendrucksensor (31) gemessenen Drucks an einen Innendruck-Informationsempfänger, der außerhalb der Aufbautrommel angeordnet ist, einschließt, **dadurch gekennzeichnet, dass**
die Übertragungseinheit (32) mit einer Schleifenantenne versehen ist, die einen Kreis auf einer vorbestimmten Ebene beschreibt.

2. Reifen-Aufbautrommel nach Anspruch 1, wobei
eine Linie, senkrecht zu der vorbestimmten Ebene, so konfiguriert ist, dass sie parallel zu einer Ebene ist, welche die Außenfläche der Trommel (9) an einer Position berührt, die in der Umfangsrichtung dem Sensormodul (30) entspricht.

## Revendications

1. Tambour de confection de bandages pneumatiques, comportant un corps de tambour (9) et une vessie (3, 4, 6) fixée sur le côté externe du corps du tambour (9), dans la direction radiale, et assurant le gonflement avec une alimentation d'air, pour plier les extrémités latérales (14b) d'une bande de carcasse (14) autour de tringles (15) sur les côtés respectifs, et/ou assurant le gonflement toroïdal d'une partie centrale (14a) de la bande de carcasse (14) s'étendant entre les tringles (15) sur les côtés respectifs, dans lequel :
un module de capteur (30) est agencé dans une cavité (23, 24) d'au moins une des vessies (3, 4, 6), le module de capteur (30) englobant un capteur de la pression interne (31), pour mesurer la pression dans la cavité (23, 24) de la vessie (3, 4, 6), et étant agencé vers l'intérieur de la surface externe du corps du tambour (9), dans la direction radiale, dans lequel :
le module de capteur (30) englobe une unité de transmission (32), pour transmettre la pression mesurée par le capteur de la pression interne (31) à un récepteur des informations relatives à la pression interne agencé à l'extérieur du tambour de confection, par ondes radioélectriques, **caractérisé en ce que**
l'unité de transmission (32) comporte une antenne en boucle formant un cercle sur un plan prédéterminé.

2. Tambour de confection de bandages pneumatiques selon la revendication 1, dans lequel :
une ligne perpendiculaire au plan prédéterminé est configurée de sorte à être en parallèle dans un plan tangent à la surface externe du tambour (9), au niveau d'une position correspondant au module de capteur (30), dans la direction circonférentielle.
